# EUROPÄISCHE PATENTANMELDUNG

(11) **EP 2 871 541 A1**
(43) Veröffentlichungstag der Anmeldung: **13.05.2015**
(21) Anmeldenummer: 14003285.5
(22) Anmeldetag: 23.09.2014
(51) Int. Cl.: G05B 19/042

(54) **Verfahren zur Konditionierung eines Werkzeugs zur Konfigurierung einer frei programmierbaren Steuerungseinrichtung**

(30) Priorität: 24.09.2013 DE 102013015923
(71) Anmelder: ABB Technology AG, 8050 Zürich (CH)
(72) Erfinder: Wagener, Dirk, 31655 Stadthagen (DE); Welte, Christoph, 89233 Neu-Ulm (DE); Heege, Marcus, 56759 Kaisersesch (DE); Mahnke, Wolfgang, 67310 Hettenleidelheim (DE); Schlüter, Marko, 32339 Espelkamp (DE)
(74) Vertreter: Marks, Frank

(57) **Zusammenfassung**

Die Erfindung betrifft ein Verfahren zur Konditionierung eines Werkzeug zur Konfigurierung einer frei programmierbaren Steuerungseinrichtung (1) für die Integration von intelligenten Feldgeräten (11 bis 13) in ein Steuerungs- oder Automatisierungssystem (1') mit einer flexibel ausbaubaren Hardwarestruktur, bei dem gerätebezogene Informationen als Objekte (1 bis 11322) einer verzweigten Baumstruktur visualisiert werden. Zur Verbesserung der Benutzerfreundlichkeit wird vorgeschlagen, während der Benutzung des Werkzeugs die Verwendung dieser Objekte (1 bis 11322) durch den Benutzer über die Lebensdauer des Steuerungs- oder Automatisierungssystems (1') aufzuzeichnen und aus den historischen Verwendungsdaten die Verwendungshäufigkeit zu ermitteln. Die einem hierarchisch übergeordneten Objekt (1 bis 11322) untergeordneten Objekte (1 bis 11322) mit hoher Verwendungshäufigkeit werden einer Objektliste (2) zugewiesen, die dem jeweiligen übergeordneten Objekt (1 bis 11322) zugeordnet wird. Bei der Verwendung des hierarchisch übergeordneten Objekts (1 bis 11322) wird in dem Werkzeug die Objektliste (2) mit den diesem übergeordneten Objekt (1 bis 11322) hierarchisch untergeordneten Objekten (1 bis 11322) mit hoher Verwendungshäufigkeit angezeigt und dem Benutzer zur Auswahl angeboten.

## Beschreibung

Die Erfindung betrifft ein Verfahren zur Konditionierung eines Werkzeugs zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur gemäß Anspruch 1. Die Erfindung findet insbesondere Verwendung in der Prozessautomation oder Maschinensteuerung zum Steuern von Prozessen und/oder Anlagenkomponenten.

Automatisierungssysteme zur Steuerung eines technischen Prozesses oder einer technischen Anlage umfassen üblicherweise eine Steuerungseinrichtung (SPS), die in einem Verbund einer Vielzahl von intelligenten elektrischen Geräten, auch Intelligent Electronic Devices (IED) genannt, integriert werden. Intelligente elektronische Geräte sind mikroprozessorbasierte Geräte wie beispielsweise Schutz- und Steuergeräte, Motorschutzgeräte, intelligente Schalter und Spannungsregler, Frequenzumrichter, Druck- und Temperaturmessumformer, Durchflussmesser und Stellantriebe.

Die Kommunikation zwischen der Steuereinrichtung und den intelligenten elektrischen Geräten (IED) wird üblicherweise mittels eines Kommunikationsprotokolls, vorzugsweise über den Kommunikationsstandard IEC 61850 ausgeführt und ist beispielsweise in der EP 1 976 281 A1 beschrieben. Zum Datenaustausch innerhalb des Systems ist es erforderlich, die Geräte (IED's) mittels eines Programmierwerkzeuges oder Programmiergerätes, auch Engineering Tool genannt, zu konfigurieren und die Geräte in das nach dem ICE 61850 Standard arbeitende Kommunikationsnetzwerk einzubinden.

Um Information zwischen den Geräten, aus welchen das Steuerungs- oder Automatisierungssystem gebildet wird, auszutauschen also Daten zwischen Funktionen auszutauschen, welche in den Geräten implementiert sind, werden zunächst die Kommunikationsknoten als der kleinste Teil einer Funktion, welche Daten mit anderen Funktionen austauscht, betrachtet. Diese logischen Knoten führen Teilfunktionen für die Gesamtfunktion aus und können einzeln oder zusammen in Geräten implementiert sein.

Jedes Gerät hat eine fest definierte Anzahl an Parametern und Funktionen, die dem Benutzer des Engineeringwerkzeugs gleichwertig präsentiert werden. Es werden aber in der Regel nur einige wenige Parameter und Funktionen benötigt. Diese variieren je nach Industriesegment, Prozessphase der Anlage und Einsatzart. So werden bestimmte Funktionen eines Gerätes nur zur Inbetriebnahme oder nur zur Wartung benötigt, wohingegen andere Parameter und Funktionen ausschließlich im laufenden Betrieb relevant sind.

Die Parameter und Funktionen sind in dem Werkzeug in einer mehrfach verzweigten hierarchischen Anordnung gruppiert und visualisiert. Aus der DE 101 17 459 A1 ist ein Verfahren und eine Vorrichtung zur Gewinnung von Diagnoseinformationen bekannt, die sich eines Engineeringwerkzeugs bedient, welches die gerätebezogene Informationen als Objekte einer mehrfach verzweigten Baumstruktur in hierarchischer Anordnung visualisiert. In dieser Baumstruktur hat der Anwender Zugriff auf Parameter und Funktionen, um das Gerät einzustellen sowie Diagnosen oder andere Funktionen auszuführen.

Um Parameter zu lesen oder zu ändern und um Funktionen auszuführen muss der Benutzer diese zunächst über eine Menüstruktur mit verschiedenen Eingabefenstern finden und auswählen. Da Feldgeräte oft viele unterschiedliche Menüs und Eingabefenster mit vielen Parametern und Funktionen haben, muss der Benutzer häufig die für seinen Anwendungsfall benötigten Parameter suchen um diese zu erkennen und ausführen. Bei der Vielzahl der Parameter und Funktionen ist diese Suche sehr zeitaufwendig und unübersichtlich. Es ist auch möglich, dass der Benutzer sinnvolle Parameter und Funktionen gar nicht wahrnimmt, weil diese in der komplexen Struktur von Menüs und Eingabefeldern versteckt sind. Dies wird als nachteilig empfunden.

Der Erfindung liegt daher die Aufgabe zugrunde, die Benutzerfreundlichkeit des bekannten Engineeringwerkzeugs zu erhöhen.

Erfindungsgemäß wird diese Aufgabe mit den Merkmalen des Patentanspruchs 1 erfüllt. Vorteilhafte Ausgestaltungen der Erfindung sind in den rückbezogenen Ansprüchen sowie der Beschreibung angegeben.

Die Erfindung geht aus von einem Werkzeug zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur, bei dem gerätebezogene Informationen als Objekte einer mehrfach verzweigten Baumstruktur hierarchisch angeordnet sind und visualisiert werden.

Erfindungsgemäß wird während der Benutzung des Werkzeugs die Verwendung dieser Objekte durch den Benutzer über die Lebensdauer des Steuerungs- oder Automatisierungssystems aufgezeichnet.

Aus den historischen Verwendungsdaten wird die Verwendungshäufigkeit der einzelnen Objekte des Steuerungs- oder Automatisierungssystems ermittelt.

Die einem hierarchisch übergeordneten Objekt untergeordneten Objekte mit hoher Verwendungshäufigkeit werden einer Objektliste zugewiesen, die dem jeweiligen übergeordneten Objekt zugeordnet wird.

Bei der Verwendung des hierarchisch übergeordneten Objekts wird in dem Werkzeug die Objektliste mit den diesem übergeordneten Objekt hierarchisch untergeordneten Objekten mit hoher Verwendungshäufigkeit angezeigt und dem Benutzer zur Auswahl angeboten.

Vorteilhafterweise befinden sich damit die in der aktuellen Lebenszyklusphase des Steuerungs- oder Automatisierungssystems häufig benutzten, hierarchisch untergeordneten Objekte im direkten Zugriff des Benutzers des Werkzeugs. Dadurch entfallen alle Zwischenschritte zur Auswahl und Aktivierung von Objekten, die in der mehrfach verzweigten Baumstruktur zwischen dem übergeordneten Objekt und den untergeordneten Objekt in der Objektliste hierarchisch angeordnet sind. Die Bedienung des Werkzeugs wird folglich vereinfacht. Darüber hinaus entfällt für alle häufig benutzten, hierarchisch untergeordneten Objekte die aufwändige Suche sowohl in den Verzweigungen der mehrfach verzweigten Baumstruktur als auch in einer ausgewählten Hierarchieebene derselben.

Während der Inbetriebnahmephase des Steuerungs- oder Automatisierungssystems sind die hierarchisch untergeordneten Objekte der Objektliste genau jene, welche in dieser aktuellen Lebenszyklusphase häufig benutzten werden, während dessen im laufenden Betrieb andere. hierarchisch untergeordneten Objekte häufig benutzten werden und somit der Objektliste zugewiesen werden.

Nach einem weiteren Merkmal der Erfindung werden die Objekte mit hoher Verwendungshäufigkeit benutzergruppenspezifisch ermittelt. In umfangreichen Steuerungs- oder Automatisierungssystemen verwenden verschiedene Benutzergruppen das Werkzeug zur Erledigung unterschiedlicher Aufgaben, mit verschiedener Häufigkeit der Benutzung der Objekte. So gebrauchen die Benutzergruppen Inbetriebnahmepersonal, Betriebspersonal und Wartungspersonal die Objekte des Steuerungs- oder Automatisierungssystems in unterschiedlicher Verwendungshäufigkeit.

Vorteilhafterweise werden für jede Benutzergruppe individuell genau jene Objekte ermittelt, die in Erfüllung ihrer Aufgabe am häufigsten verwendet werden, und welche sich von den Objekten anderer Benutzergruppen entsprechend ihrer Verwendungshäufigkeit unterscheiden.

Nach einem weiteren Merkmal der Erfindung werden die Objekte mit hoher Verwendungshäufigkeit benutzerspezifisch ermittelt. An größeren Steuerungs- oder Automatisierungssystemen arbeiten die Benutzergruppen arbeitsteilig und spezialisiert auf unterschiedliche Aufgaben. Somit variiert die Verwendungshäufigkeit der einzelnen Objekte des Steuerungs- oder Automatisierungssystems innerhalb der Benutzergruppe benutzerindividuell.

Vorteilhafterweise werden für jeden Benutzer individuell genau jene Objekte ermittelt, die in Erfüllung seiner Aufgabe am häufigsten verwendet werden, und welche sich von den Objekten anderer Benutzer entsprechend ihrer Verwendungshäufigkeit unterscheiden.

Nach einem weiteren Merkmal der Erfindung werden die Objekte mit hoher Verwendungshäufigkeit arbeitsplatzspezifisch ermittelt. Größere Steuerungs- oder Automatisierungssystemen weisen häufig eine Mehrzahl von Arbeitsplätzen zur Bedienung des Steuerungs- oder Automatisierungssystems im laufenden Betrieb auf, wobei mindestens ein Arbeitsplatz speziell für Wartungsarbeiten vorgehalten wird. Die Verwendungshäufigkeit von Objekten des Steuerungs- oder Automatisierungssystems während des laufenden Betriebes unterscheidet sich von denen bei der Wartung desselben.

Vorteilhafterweise werden für jeden Arbeitsplatz individuell genau jene Objekte ermittelt, die in Erfüllung der Aufgabe an diesem Arbeitsplatz am häufigsten verwendet werden, und welche sich von den Objekten anderer Arbeitsplätze entsprechend ihrer Verwendungshäufigkeit unterscheiden.

Nach einem weiteren Merkmal der Erfindung werden für ein neues Objekt historische Daten bestehender Objekte desselben Objekttyps bereitgestellt, welche das Nutzungsverhalten abbilden und aus denen die Verwendungshäufigkeit des neuen Objekts des Steuerungs- oder Automatisierungssystems ermittelt wird.

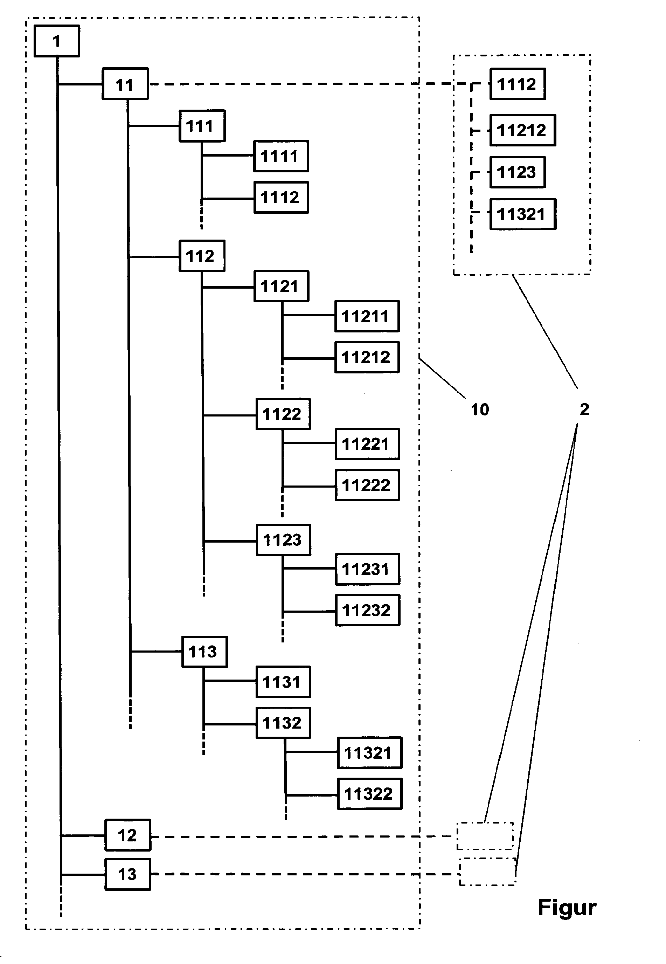

Die Erfindung wird nachstehend anhand eines Ausführungsbeispiels näher erläutert. In der einzigen Figur ist eine für sich bekannte, mehrfach verzweigten Baumstruktur dargestellt, in der die Objekte **1** bis **11322** eines Steuerungs- oder Automatisierungssystemen **1'** in einem Werkzeug zur Konfigurierung einer frei programmierbaren Steuerungseinrichtung **1** für die Integration von intelligenten Feldgeräten **11** bis **13** in das Steuerungs- oder Automatisierungssystem **1'** in verschiedenen Hierarchieebenen angeordnet sind.

Die Objekte 1 bis **11322** weisen ein- bis fünfstellige Objektbezeichner, wobei Stellenzahl der Objektbezeichner die Hierarchieebene angibt. Die höchste Hierarchieebene hat demnach einstellige Objektbezeichner und die niedrigste Hierarchieebene hat fünfstellige Objektbezeichner. Je nach Umfang des Steuerungs-oder Automatisierungssystemen **1'** können sechste und weitere Hierarchieebenen vorgesehen sein.

Die erste Hierarchieebene, die Steuerungsebene, des Steuerungs- oder Automatisierungssystems **1'** weist mindestens ein Objekt **1** auf, welches durch eine Steuerungseinrichtung **1** gebildet ist.

An die Steuerungseinrichtung **1** sind die Feldgeräte **11, 12, 13** usw. angeschlossen, welche die Objekte **11, 12, 13** usw. der zweite Hierarchieebene, die Geräteebene, des Steuerungs- oder Automatisierungssystemen **1'** bilden.

Die Feldgeräte 11, **12, 13** usw. weisen eine Vielzahl von Eigenschaften auf, welche als Parameter **1111, 1112, 11211** bis **11232, 1131** sowie **11321** und **11322** gruppiert in Menüs **111, 112, 113** und Untermenüs **1121** bis **1123** sowie **1132** auswählbar und aktivierbar sind.

Die Parameter **1111,1112,11211** bis **11232, 1131** sowie **11321** und **11322** sind Objekte, welchen hierarchisch keine weiteren Objekte untergeordnet sind. Die Menüs **111, 112, 113** sind Objekte, denen hierarchisch weitere Objekte untergeordnet sind, welche Untermenüs **1121** bis **1123** sowie **1132** sowie oder Parameter **1111, 1112, 1131** sein können. Die Untermenüs **1121** bis **1123** sowie **1132** sind Objekte, denen hierarchisch weitere Objekte untergeordnet sind, nämlich die Parameter **11211** bis **11322.**

Dabei sind die Menüs **111, 112, 113** auf der dritten Hierarchieebene und die Untermenüs **1121 bis 1123** und **1132** auf der vierten Hierarchieebene angeordnet. Die Parameter **1111,1112,11211** bis **11232, 1131** sowie **11321** und **11322** sind je nach Anzahl und Sachzugehörigkeit auf verschiedenen Hierarchieebenen untergebracht. So sind die Parameter **1111, 1112** und **1131** sind auf der vierten Hierarchieebene unter den Menü **111** und die Parameter **11211** bis **11322** auf der fünften Hierarchieebene unter den Untermenüs **1121** bis **1123** und **1132** angeordnet.

Um in der bekannten, mehrfach verzweigten Baumstruktur des Steuerungs- oder Automatisierungssystems **1'** zum Parameter **11321** zu gelangen, ist ausgehend von der Steuerungseinrichtung **1** in einem ersten Schritt das Feldgerät **11** auszuwählen. In einem zweiten Schritt ist das Menü **113** und in einem dritten Schritt das Untermenü **1132** auszuwählen. Erst im vierten Schritt wird der Parameter **11321** erreicht.

Erfindungsgemäß wird während der Benutzung des Werkzeugs zur Konfigurierung einer frei programmierbaren Steuerungseinrichtung **1** für die Integration von intelligenten Feldgeräten **11, 12, 13** usw. in ein Steuerungs- oder Automatisierungssystem **1'** die Verwendung dieser Objekte **1** bis **11322** durch den Benutzer über die Lebensdauer des Steuerungs- oder Automatisierungssystems **1'** aufgezeichnet.

Die Verwendung eines Objekts **1** bis **11322** umfasst beispielsweise aber nicht abschließend geschriebene Parameter **1111, 1112, 11211** bis **11232, 1131** sowie **11321** und **11322,** geöffnete Fenster, Dialoge, Menüs **111, 112, 113** oder Untermenüs **1121** bis **1123** und **1132,** geöffnete Tab-Seiten in Fenster, Dialoge, Menüs **111, 112, 113** oder Untermenüs **1121** bis **1123** und **1132** oder aufgerufene Methoden.

Aus den historischen Verwendungsdaten wird die Verwendungshäufigkeit der einzelnen Objekte **1** bis **11322** des Steuerungs- oder Automatisierungssystems **1'** ermittelt. Dabei wird davon ausgegangen, dass die Objekte **1** bis **11322** höchster Verwendungshäufigkeit mit größter Wahrscheinlichkeit gesucht werden.

Die einem hierarchisch übergeordneten Objekt **11** untergeordneten Objekte **1112, 11212, 11321** und **1123** mit hoher Verwendungshäufigkeit werden einer Objektliste **2** zugewiesen, die dem jeweiligen übergeordneten Objekt **11** zugeordnet wird. Die Objektliste 2 kann in Form eines Menüs oder Kontextmenüs in das Werkzeug integriert sein.

Bei der Verwendung des hierarchisch übergeordneten Objekts **11** wird in dem Werkzeug die Objektliste **2** mit den diesem übergeordneten Objekt **11** hierarchisch untergeordneten Objekten **1112, 11212, 11321** und **1123** mit hoher Verwendungshäufigkeit angezeigt und dem Benutzer zur Auswahl angeboten.

Um zum Parameter **11321** zu gelangen, ist ausgehend von der Steuerungseinrichtung **1** in einem ersten Schritt das Feldgerät **11** auszuwählen. Bereits im zweiten Schritt wird aus der dem Feldgerät **11** zugeordneten Objektliste **2** der Parameter **11321** erreicht. Die Anzahl der nötigen Schritte ist gegenüber der Suche in der bekannten, mehrfach verzweigten Baumstruktur halbiert.

Vorteilhafterweise sind in dem Werkzeug zur Konfigurierung einer frei programmierbaren Steuerungseinrichtung **1** für die Integration von intelligenten Feldgeräten **11** bis **13** in das Steuerungs- oder Automatisierungssystem **1'** die häufig benutzten Parameter **1112, 11212, 11321** und/oder Menüs/Untermenüs **1123** unmittelbar den jeweiligen Feldgeräten **11** bis **13** zugeordnet und für den Benutzer schnell und komfortabel erreichbar.

In weiterer Ausgestaltung der Erfindung kann vorgesehen sein, die Objektliste **2** in verschiedene Kategorien aufzuteilen. Solche Kategorien sind beispielsweise aber nicht abschließend zuletzt geänderte oder am meisten geänderte Parameter **1111, 1112, 11211** bis **11232, 1131** sowie **11321** und **11322** oder zuletzt oder am meisten aufgerufene Funktionen.

In weiterer Ausgestaltung der Erfindung kann vorgesehen sein, die Objekte **1112, 11212, 11321** und **1123** mit hoher Verwendungshäufigkeit benutzergruppenspezifisch, benutzerspezifisch oder arbeitsplatzspezifisch zu ermitteln.

In weiterer Ausgestaltung der Erfindung kann vorgesehen sein, für ein neues Objekt **1** bis **11322** historische Daten bestehender Objekte **1** bis **11322** desselben Objekttyps bereitzustellen, welche das Nutzungsverhalten abbilden und aus denen die Verwendungshäufigkeit des neuen Objekts **1** bis **11322** des Steuerungs- oder Automatisierungssystems **1'** ermittelt wird. Die historischen Daten können beispielsweise aber nicht abschließend durch automatische Installation mit dem Werkzeug, durch manuelle Installation mittels eines Datenträgers oder durch manuelle oder automatische Installation über das Internet importiert werden.

Auf diese Weise liegen bereits bei der ersten Benutzung des Werkzeugs zur Konfigurierung einer frei programmierbaren Steuerungseinrichtung 1 für die Integration von intelligenten Feldgeräten **11** bis **13** in ein Steuerungs- oder Automatisierungssystem **1'** Daten über die Verwendung dieser Objekte **1** bis **11322** zur Ermittlung der Verwendungshäufigkeiten vor.

### Bezugszeichenliste

- 1 bis 11322: Objekt
- 1': Steuerungs- oder Automatisierungssystem
- 2: Objektliste

## Patentansprüche

1. Verfahren zur Konditionierung eines Werkzeugs zur Konfigurierung einer frei programmierbaren Steuerungseinrichtung (1) für die Integration von intelligenten Feldgeräten (11 bis 13) in ein Steuerungs- oder Automatisierungssystem (1') mit einer flexibel ausbaubaren Hardwarestruktur, bei dem gerätebezogene Informationen als Objekte (1 bis 11322) einer mehrfach verzweigten Baumstruktur hierarchisch angeordnet sind und visualisiert werden,
**dadurch gekennzeichnet,**
- **dass** während der Benutzung des Werkzeugs die Verwendung dieser Objekte (1 bis 11322) durch den Benutzer über die Lebensdauer des Steuerungs- oder Automatisierungssystems (1') aufgezeichnet wird,
- **dass** aus den historischen Verwendungsdaten die Verwendungshäufigkeit der einzelnen Objekte (1 bis 11322) des Steuerungs- oder Automatisierungssystems (1') ermittelt wird,
- **dass** die einem hierarchisch übergeordneten Objekt (1 bis 11322) untergeordneten Objekte (1 bis 11322) mit hoher Verwendungshäufigkeit einer Objektliste (2) zugewiesen werden, die dem jeweiligen übergeordneten Objekt (1 bis 11322) zugeordnet wird und
- **dass** bei der Verwendung des hierarchisch übergeordneten Objekts (1 bis 11322) wird in dem Werkzeug die Objektliste (2) mit den diesem übergeordneten Objekt (1 bis 11322) hierarchisch untergeordneten Objekten (1 bis 11322) mit hoher Verwendungshäufigkeit angezeigt und dem Benutzer zur Auswahl angeboten.

2. Verfahren nach Anspruch 1
**dadurch gekennzeichnet,**
**dass** die Objekte (1 bis 11322) mit hoher Verwendungshäufigkeit benutzergruppenspezifisch ermittelt werden.

3. Verfahren nach Anspruch 1
**dadurch gekennzeichnet,**
**dass** die Objekte (1 bis 11322) mit hoher Verwendungshäufigkeit benutzerspezifisch ermittelt werden.

4. Verfahren nach Anspruch 1
**dadurch gekennzeichnet,**
**dass** die Objekte (1 bis 11322) mit hoher Verwendungshäufigkeit arbeitsplatzspezifisch ermittelt werden.

5. Verfahren nach einem der Ansprüche 1 bis 4
**dadurch gekennzeichnet,**
**dass** für ein neues Objekt (1 bis 11322) historische Daten bestehender Objekte (1 bis 11322) desselben Objekttyps bereitgestellt werden, welche das Nutzungsverhalten abbilden und aus denen die Verwendungshäufigkeit des neuen Objekts (1 bis 11322) des Steuerungs- oder Automatisierungssystems (1') ermittelt wird.
